# EUROPEAN PATENT APPLICATION

(11) **EP 4 671 164 A1**
(43) Date of publication of application: **31.12.2025**
(21) Application number: 24792589.4
(22) Date of filing: 11.04.2024
(51) Int. Cl.: B65G 47/14

(54) **ALIGNMENT CONVEYANCE DEVICE**

(30) Priority: 18.04.2023 JP 2023067797
(71) Applicant: Qualicaps Co., Ltd., Nara 639-1032 (JP)
(72) Inventor: KASAI, Kenichi, Yamatokoriyama-shi, Nara 639-1032 (JP)
(74) Representative: Isarpatent
(86) International application number: PCT/JP2024/014624
(87) International publication number: WO 2024/219314

(57) **Abstract**

Included are: a rotary disk 10 that has a disk-shaped bottom wall 11 and is rotatably supported; a first ring 20 that has a first peripheral wall 21 surrounding the bottom wall 11 and is rotatably supported; and a second ring 30 that has a second peripheral wall 31 surrounding the first peripheral wall 21 and is rotatably supported, in which: a first transfer part 91 and a second transfer part 92 are provided in upper portions of the first peripheral wall 11 and the second peripheral wall 21, respectively; an outer peripheral side of the first transfer part 91 is inclined downward with respect to a first virtual plane V1 orthogonal to a rotation axis 20X of the first ring 20; and an outer peripheral side of the second transfer part 92 is inclined downward with respect to a second virtual plane V2 orthogonal to a rotation axis of the second ring 30.

## Description

### Technical Field

The present invention relates to an alignment transfer device, and more particularly to an alignment transfer device that transfers solid dosage forms, such as tablets or capsules, in an aligned state.

### Background Art

As a conventional alignment transfer device, the configuration disclosed in Patent Literature 1 is known. As illustrated in FIG. 7, an alignment transfer device 100 includes a rotary disk 101, a first ring 102, and a second ring 103, and when each of them is individually rotationally driven in the arrow direction, a solid dosage form P supplied onto the rotary disk 101 receives a centrifugal force and moves to the upper portion of the peripheral wall of the second ring 103 through the upper portion of the peripheral wall of the first ring 102. The solid dosage form P to be transferred by the second ring 103 is adsorbed onto the outer peripheral surface of a suction roller 104 and transferred upward.

### Citation List

### Patent Literature

Patent Literature 1: JP 6503525 B2

### Summary of Invention

### Technical Problem

The conventional alignment transfer device 100 described above can continuously supply the solid dosage forms P in an aligned state to a printing apparatus, an inspection apparatus, or the like, but for example, when a large amount of information is printed in a printing apparatus at a transfer destination, or when repeated printing is performed in order to increase the print density, it is necessary to secure a printing time in the printing apparatus by reducing the transfer speed of the alignment transfer device 100.

However, when the transfer speed is reduced in the conventional alignment transfer device 100, the centrifugal force to act on the solid dosage form P becomes small, and thus there is a risk that it may become difficult to reliably move the solid dosage form P from the rotary disk 101 toward the first ring 102 and the second ring 103.

Therefore, an object of the present invention is to provide an alignment transfer device capable of reliably aligning and transferring a solid dosage form even during low-speed transfer.

### Solution to Problem

The object of the present invention is achieved by an alignment transfer device including: a rotary disk that has a disk-shaped bottom wall whose upper surface is inclined downward toward a radially outer side and is rotatably supported; a first ring that has a first peripheral wall surrounding the bottom wall and is rotatably supported; a second ring that has a second peripheral wall surrounding the first peripheral wall and is rotatably supported; and a driving means for rotatably driving the rotary disk, the first ring, and the second ring independently around respective rotation axes, in which: a first transfer part and a second transfer part are provided in upper portions of the first peripheral wall and the second peripheral wall, respectively; the respective rotation axes of the rotary disk and the first ring are relatively inclined such that the bottom wall is located below the first transfer part so as to form a retention space for a solid dosage form inside the first ring and the solid dosage form moves from the bottom wall to the first transfer part at a first delivery position; the respective rotation axes of the first ring and the second ring are relatively inclined such that the first transfer part is located below the second transfer part and the dosage form moves from the first transfer part to the second transfer part at a second delivery position; an outer peripheral side of the first transfer part is inclined downward with respect to a first virtual plane orthogonal to the rotation axis of the first ring; an outer peripheral side of the second transfer part is inclined downward with respect to a second virtual plane orthogonal to the rotation axis of the second ring, and the second transfer part is surrounded by a ring-shaped holding part; an angle formed by the first virtual plane and the first transfer part is 20 to 40 degrees; and an angle formed by the second virtual plane and the second transfer part is 5 to 30 degrees.

In this alignment transfer device, it is preferable that a plurality of recesses be formed in a circumferential direction in the first transfer part, and it is preferable that the depth of the recess be smaller than the height of the solid dosage form.

It is preferable that a plurality of storage parts, formed in a notch shape in a radial direction, be formed in the circumferential direction on the inner peripheral surface of the holding part of the second transfer part. It is preferable that the radial depth of the storage part be smaller than the width of the solid dosage form.

### Advantageous Effects of Invention

According to the alignment transfer device of the present invention, the solid dosage form can be reliably transferred even during low-speed transfer.

### Brief Description of Drawings

FIG. 1 is a cross-sectional view of an alignment transfer device according to one embodiment of the present invention.
FIG. 2 is a perspective view of the alignment transfer device illustrated in FIG. 1.
FIG. 3 is an enlarged view of a main part of FIG. 2.
FIG. 4 is a cross-sectional view taken along line A-A in FIG. 3.
FIG. 5 is a perspective view of an alignment transfer device according to another embodiment of the present invention.
FIG. 6 is an enlarged view of a main part of FIG. 5.

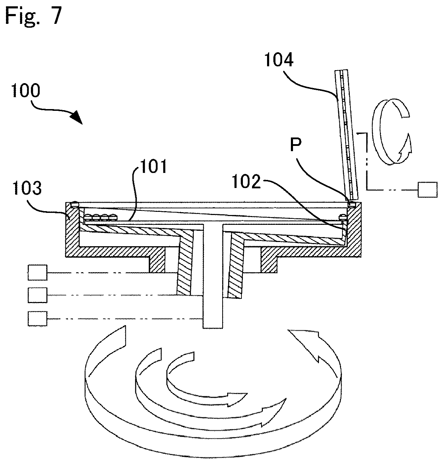

FIG. 7 is a schematic configuration view of a conventional alignment transfer device.

### Description of Embodiments

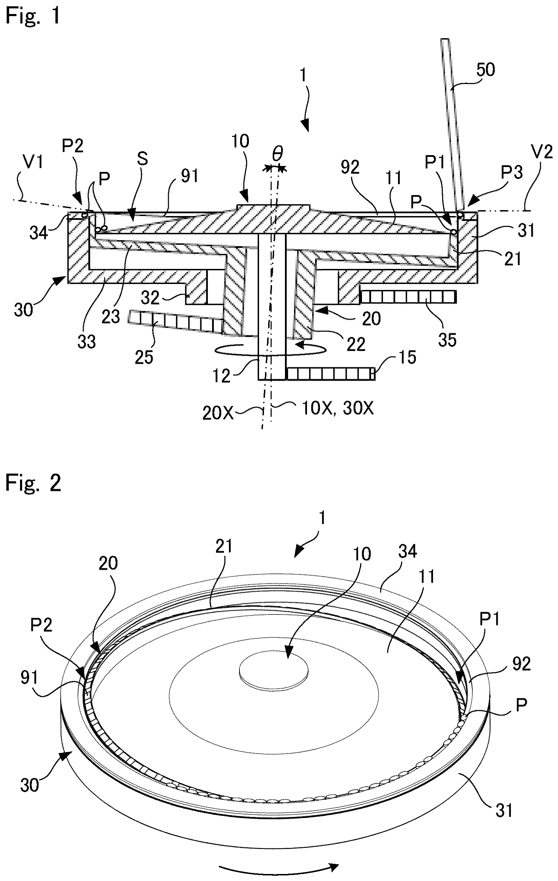

Hereinafter, embodiments of the present invention will be described with reference to the accompanying drawings. FIG. 1 is a cross-sectional view of an alignment transfer device according to one embodiment of the present invention. FIG. 2 is a perspective view of the alignment transfer device illustrated in FIG. 1 as viewed obliquely from above. An alignment transfer device 1 illustrated in FIGS. 1 and 2 has the same configuration as the alignment transfer device disclosed in Patent Literature 1, and includes a rotary disk 10, a first ring 20 that stores the rotary disk 10, and a second ring 30 that stores the first ring 20. The alignment transfer device 1 can align and transfer a solid dosage form P, such as a tablet or a capsule, toward, for example, a printing apparatus or an inspection apparatus. In a case where the solid dosage form P is a tablet, the shape thereof is not particularly limited, and a flat tablet, an R-shaped tablet, a round tablet, an irregular-shaped tablet, or the like can be exemplified.

As illustrated in FIGS. 1 and 2, the rotary disk 10 has a disk-shaped bottom wall 11 whose upper surface is inclined downward toward the radial outside, and is rotatably supported around a rotation axis 10X of the bottom wall 11. The first ring 20 has a first peripheral wall 21 surrounding the bottom wall 11 of the rotary disk 10, and is rotatably supported around a rotation axis 20X of the first peripheral wall 21. The second ring 30 has a second peripheral wall 31 surrounding the first peripheral wall 21 of the first ring 20, and is rotatably supported around a rotation axis 30X of the second peripheral wall 31. The rotary disk 10, the first ring 20, and the second ring 30 are connected to drive sources (not illustrated), such as motors, individually provided via respective speed reducers 15, 25, and 35, and are independently rotationally driven in the same direction (arrow direction), respectively. The rotation axes 10X, 30X extend in the vertical direction, while the rotation axis 20X is slightly inclined with respect to the rotation axes 10X, 30X.

A first transfer part 91 and a second transfer part 92 that transfer the solid dosage form P in an aligned state in the circumferential direction are provided in the upper portions of the first ring 20 and the second ring 30, respectively. The first transfer part 91 includes the upper end surface of the first peripheral wall 21, having a cylindrical shape, whose radially outer side is covered with the inner wall surface of the second peripheral wall 31. The second transfer part 92 includes a portion on the outer peripheral side thereof is surrounded by a ring-shaped holding part 34 on the upper end surface of the second peripheral wall 31 having a cylindrical shape. The radial widths of the first transfer part 91 and the second transfer part 92 are set in accordance with the size of the solid dosage form P such that the solid dosage forms P are aligned and arranged in a line along the circumferential direction.

In the rotary disk 10 and the first ring 20, the bottom wall 11 is located below the first transfer part 91 so as to form a retention space S, where the solid dosage forms P can be retained, inside the first ring 20, and the respective rotation axes 10X, 20X are relatively inclined such that, at a first delivery position P1, the solid dosage form P can be delivered with the upper surface of the bottom wall 11 lying at substantially the same height as the first transfer part 91. In the first ring 20 and the second ring 30, the first transfer part 91 is located below the second transfer part 92, and the respective rotation axes 20X, 30X are relatively inclined such that, at a second delivery position P2, the solid dosage form P can be delivered with the first transfer part 91 and the second transfer part 92 lying at substantially the same height. The first delivery position P1 and the second delivery position P2 have a point-symmetrical relationship across the rotation axis 10X in plan view, in which the second delivery position P2 is provided at a position rotated by 180° around the rotation axis 10X from the first delivery position P1.

Similarly to the conventional alignment transfer device, the solid dosage form P, transferred by the second transfer part 92, is vacuum-adsorbed to a suction roller 50, having an adsorbing portion on the outer peripheral surface, at a third delivery position P3, and is transferred toward an external transfer destination.

As illustrated in FIG. 1, the rotary disk 10 includes a shaft portion 12 extending vertically downward along the rotation axis 10X from the center of the bottom wall 11, the shaft portion 12 being rotationally driven. The first ring 20 includes a lower lid 23 covering the lower portion of the first peripheral wall 21 and a shaft portion 22 extending downward along the rotation axis 20X from the center of the lower lid 23, the shaft portion 22 being rotationally driven. The shaft portion 22 is a hollow shaft, and the shaft portion 12 of the rotary disk 10 is inserted into the shaft portion. The rotation axis 20X of the first ring 20 is inclined by an angle θ with respect to the rotation axis 10X of the bottom wall 11. If the angle θ is too small, the retention space S for storing the solid dosage forms P on the first peripheral wall 21 surrounding the bottom wall 11 of the rotary disk 10 becomes too small. On the other hand, if the angle θ is too large, the transfer of the solid dosage form P by the first transfer part 91 tends to be difficult. Therefore, it is preferable that the angle θ be, for example, 1 to 20°.

The rotation axis 10X of the rotary disk 10 is not necessarily arranged in the vertical direction, and may be inclined with respect to the vertical direction. In a case where the rotation axis 10X of the rotary disk 10 is inclined with respect to the vertical direction, the rotation axis 20X of the first ring 20 may be arranged in the vertical direction, or may be arranged to be inclined in the same direction or the opposite direction as or to the inclination direction of the rotation axis 10X with respect to the vertical direction.

The second ring 30 includes a lower lid 33 covering the lower portion of the second peripheral wall 31 and a shaft portion 32 extending vertically downward along the rotation axis 30X from the center of the lower lid 33, the shaft portion 32 being rotationally driven. The shaft portion 32 is a hollow shaft, and the shaft portion 22 of the first ring 20 is inserted thereinto. The rotation axis 30X of the second ring 30 is inclined by an angle θ with respect to the rotation axis 20X of the first ring 20.

The rotation axis 30X of the second ring 30 is not necessarily arranged in the vertical direction, and may be inclined with respect to the vertical direction. In a case where the rotation axis 30X of the second ring 30 is inclined with respect to the vertical direction, the rotation axis 20X of the first ring 20 may be arranged in the vertical direction, or may be arranged to be inclined in the same direction or the opposite direction as or to the inclination direction of the rotation axis 30X with respect to the vertical direction.

The rotational speed of the first ring 20 is set to be higher than the rotational speed of the rotary disk 10 and lower than the rotational speed of the second ring 30. Preferably, the rotational speed of the first ring 20 is set to be higher than the rotational speed of the rotary disk 10 and lower than 1.5 times the rotational speed of the rotary disk 10, and the rotational speed of the second ring 30 is set to be higher than the rotational speed of the first ring 20 and lower than 1.5 times the rotational speed of the first ring 20.

As illustrated in FIG. 1, the first transfer part 91 is formed in a tapered shape such that the outer peripheral side is inclined downward with respect to a first virtual plane V1 orthogonal to the rotation axis 20X of the first ring 20. The second transfer part 92 is formed in a tapered shape such that the outer peripheral side is inclined downward with respect to a second virtual plane V2 orthogonal to the rotation axis 30X of the second ring 30. In the present embodiment, the second virtual plane V2 is parallel to the horizontal plane. The ring-shaped holding part 34 surrounding the second transfer part 92 may be formed integrally with the upper end surface of the second peripheral wall 31, or may be detachably attached to the upper end surface of the second peripheral wall 31.

In the alignment transfer device 1 having the above configuration, the solid dosage form P charged into the retention space S formed by the rotary disk 10 and the first ring 20 moves radially outward along the bottom wall 11 by receiving the centrifugal force due to the rotation of the rotary disk 10, and moves in an aligned state from the first delivery position P1 to the first transfer part 91, similarly to the alignment transfer device disclosed in the above Patent Literature 1. When reaching the second delivery position P2, the solid dosage form P transferred by the first transfer part 91 receives the centrifugal force due to the rotation of the first ring 20 and moves from the first transfer part 91 to the second transfer part 92. The solid dosage form P having moved to the second transfer part 92 is transferred while being held by the holding part 34, and when reaching the third delivery position P3 in an aligned state, the solid dosage form P is adsorbed by the suction roller 50 and transferred toward an external printing apparatus, inspection apparatus, or the like. A height regulating guide (not illustrated), through which only the solid dosage form P in a correct posture can pass, may be provided above the second transfer part 92.

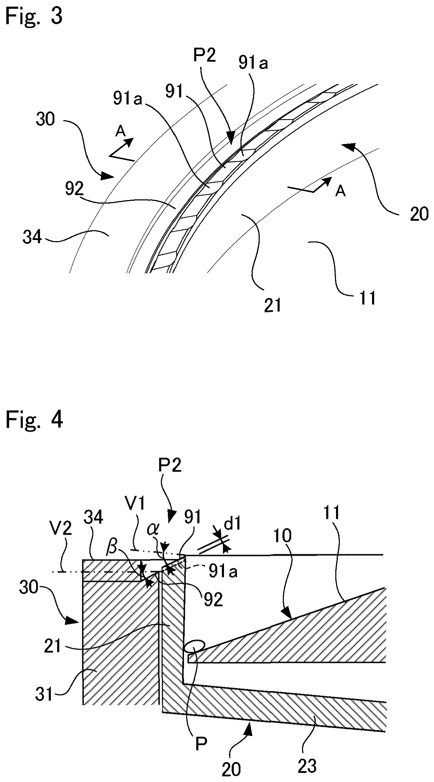

FIG. 3 is an enlarged view illustrating the vicinity of the second delivery position P2 in the alignment transfer device 1 illustrated in FIG. 2, and FIG. 4 is a cross-sectional view taken along line A-A in FIG. 3. As illustrated in FIGS. 3 and 4, the first transfer part 91 has a plurality of recesses 91a formed at equal intervals in the circumferential direction. Each recess 91a is formed in an arcuate cross section extending in a groove shape from the inner periphery to the outer periphery of the first peripheral wall 21.

An angle α formed by the first virtual plane V1 (see FIG. 1) and the first transfer part 91 illustrated in FIG. 4 is set such that even if the centrifugal force acting on the solid dosage form P is weak due to the low rotational speed of the first ring 20, the solid dosage form P having moved from the rotary disk 10 to the first transfer part 91 is reliably held in the first transfer part 91 by using the inclination of the first transfer part 91, and the solid dosage form P can be reliably moved from the first transfer part 91 to the second transfer part 92. However, if the angle α is set to be too large, there is a risk that, in a case where the solid dosage form P is a circular tablet or the like, the solid dosage form P is likely to roll in the direction opposite to the traveling direction during the transfer by the first transfer part 91, which may hinder the transfer. Therefore, the angle α is preferably 20 to 40 degrees, and more preferably 25 to 35 degrees.

In addition, an angle β formed by the second virtual plane V2 (see FIG. 1) and the second transfer part 92 illustrated in FIG. 4 is set such that even if the centrifugal force acting on the solid dosage form P is weak due to the low rotational speed of the second ring 30, the solid dosage form P having moved from the first transfer part 91 can be reliably held in the second transfer part 92 by using the inclination of the second transfer part 92. However, if the angle β is set to be too large, there is a risk that it may become difficult to align the solid dosage form P in the circumferential direction during the transfer of the solid dosage form P by the second transfer part 92. Therefore, the angle β is preferably 5 to 30 degrees, and more preferably 10 to 20 degrees.

By setting the inclination angles of the first transfer part 91 and the second transfer part 92 as described above, the solid dosage form P can be reliably aligned and transferred even when the rotational speeds of the rotary disk 10, the first ring 20, and the second ring 30 are set to be sufficiently low (e.g., about 1/10 of the conventional rotational speeds). This makes it possible to properly set the transfer speed of the solid dosage form P particularly in a wide range on the low-speed side in accordance with the processing capability of a printing apparatus, inspection apparatus, or the like at a transfer destination.

In the present embodiment, the angles α and β are set such that the first transfer part 91 and the second transfer part 92 are parallel to each other in cross-sectional view as illustrated in FIG. 4, but the first transfer part 91 and the second transfer part 92 may be nonparallel to each other. That is, with respect to the horizontal plane (second virtual plane V2), the inclination of first transfer part 91 may be steeper than the inclination of second transfer part 92, or the inclination of first transfer part 91 may be gentler than the inclination of second transfer part 92.

The plurality of recesses 91a formed in the first transfer part 91 function to prevent rolling back during transfer in the case where the solid dosage form P has a shape, such as a round tablet, in which the solid dosage form P is likely to roll. As illustrated in FIGS. 1 and 2, the first transfer part 91 transfers the solid dosage form P obliquely upward from the first delivery position P1 toward the second delivery position P2, and thus when the centrifugal force acting on the solid dosage form P is weak, there is an increased risk that the solid dosage form P to be transferred by the first transfer part 91 may roll in the direction opposite to the transfer direction due to its own weight. However, the solid dosage form P can be reliably transferred by preventing movement in the opposite direction with the recess 91a receiving the solid dosage form P.

Although the recess 91a of the present embodiment is formed in a groove shape extending entirely in the thickness direction of the first transfer part 91, the recess 91a may be formed in a depression shape or a notch shape. The shape and size of the recess 91a are not particularly limited as long as the solid dosage form P can be received therein. If a depth d1 of the recess 91a illustrated in FIG. 4 is too large, it becomes difficult to align the solid dosage form P received by the recess 91a during the transfer, and thus it is preferable that the depth d1 be smaller than the height of the solid dosage form P. Here, the height of the solid dosage form P is a height, in the direction perpendicular to the inclined surface of the first transfer part 91, of the solid dosage form P aligned and transferred in a correct posture by the first transfer part 91. If the depth d1 of the recess 91a is too small, the rolling back of the solid dosage form P cannot be effectively prevented. Therefore, the depth d1 is preferably 1 to 20% of the height of the solid dosage form P, and more preferably 5 to 15%.

In the present embodiment, at the second delivery position P2, the end on the outer peripheral side of the first transfer part 91 is arranged at a position higher than the end on the inner peripheral side of the second transfer part 92 and the bottom of the recess 91a is arranged at substantially the same height as the end on the inner peripheral side of the second transfer part 92 as illustrated in FIG. 4, thereby enabling smooth delivery of the solid dosage form P. However, the positional relationship in the vertical direction between the first transfer part 91 and the second transfer part 92 at the second delivery position P2 is not necessarily limited to that of the present embodiment as long as the solid dosage form P can be reliably moved from the first transfer part 91 to the second transfer part 92.

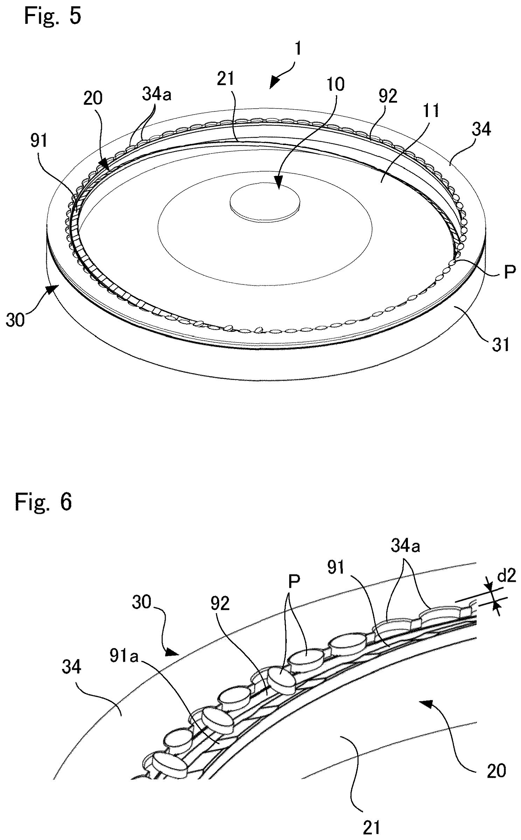

Although one embodiment of the present invention has been described in detail above, specific aspects of the present invention are not limited to the above embodiment. For example, in the alignment transfer device 1 illustrated in FIG. 2, the inner peripheral surface of the ring-shaped holding part 34 is formed to be flat, but as illustrated in FIG. 5, a plurality of storage parts 34a may be formed on the inner peripheral surface of the holding part 34. Since the other configurations of an alignment transfer device 1 illustrated in FIG. 5 are similar to the configurations of the alignment transfer device 1 illustrated in FIG. 2, the same components as those in FIG. 2 are denoted by the same reference signs in FIG. 5, and repeated description is omitted.

FIG. 6 is an enlarged view of the main part of FIG. 5. As illustrated in FIGS. 5 and 6, the storage parts 34a are formed in a notch shape in the radial direction, and are arranged at equal intervals in the circumferential direction of the holding part 34. The shape of the storage part 34a is curved in plan view in accordance with the shape of the solid dosage form P to be transferred, and as illustrated in FIG. 6, the storage part 34a is formed with a size capable of storing about half of the solid dosage form P in an aligned state.

As described above, by forming a plurality of the storage parts 34 on the inner peripheral surface of the holding part 34 to store the solid dosage form P in each storage part 34 and aligning and transferring the solid dosage form P, the interval between the solid dosage forms P to be transferred by the second transfer part 92 can be widened in accordance with the pitch of the storage parts 34. Therefore, by combining with the above-described low-speed transfer of the solid dosage form P, the transfer amount per unit time of the solid dosage forms P can be reliably reduced, and the solid dosage forms P can be aligned and transferred at regular intervals.

It is preferable that a depth d2 in the radial direction of the storage part 34a illustrated in FIG. 6 be smaller than the width of the solid dosage form P, which makes it possible to suppress a plurality of the solid dosage forms P during transfer from simultaneously entering the same storage part 34a and reliably store the solid dosage form P in each storage part 34a. Here, the width of the solid dosage form P is a width, along the radial direction of the second transfer part 92, of the solid dosage form P to be aligned and transferred in a correct posture by the second transfer part 92. The depth d2 of the storage part 34a is preferably 20 to 70% of the width of the solid dosage form P, and more preferably 30 to 50%.

### Reference Signs List

- 1: alignment transfer device
- 10: rotary disk
- 10X: rotation axis
- 20: first ring
- 20X: rotation axis
- 21: first peripheral wall
- 30: second ring
- 34: holding part
- 30X: rotation axis
- 31: second peripheral wall
- 91: first transfer part
- 91a: recess
- 92: second transfer part
- P: dosage form
- P1: first delivery position
- P2: second delivery position

## Claims

1. An alignment transfer device comprising:
a rotary disk that has a disk-shaped bottom wall whose upper surface is inclined downward toward a radially outer side and is rotatably supported;
a first ring that has a first peripheral wall surrounding the bottom wall and is rotatably supported;
a second ring that has a second peripheral wall surrounding the first peripheral wall and is rotatably supported; and
a driving means for rotatably driving the rotary disk, the first ring, and the second ring independently around respective rotation axes, wherein:
a first transfer part and a second transfer part are provided in upper portions of the first peripheral wall and the second peripheral wall, respectively;
the respective rotation axes of the rotary disk and the first ring are relatively inclined such that the bottom wall is located below the first transfer part so as to form a retention space for a solid dosage form inside the first ring and the solid dosage form moves from the bottom wall to the first transfer part at a first delivery position;
the respective rotation axes of the first ring and the second ring are relatively inclined such that the first transfer part is located below the second transfer part and the dosage form moves from the first transfer part to the second transfer part at a second delivery position;
an outer peripheral side of the first transfer part is inclined downward with respect to a first virtual plane orthogonal to the rotation axis of the first ring;
an outer peripheral side of the second transfer part is inclined downward with respect to a second virtual plane orthogonal to the rotation axis of the second ring, and the second transfer part is surrounded by a ring-shaped holding part;
an angle formed by the first virtual plane and the first transfer part is 20 to 40 degrees; and
an angle formed by the second virtual plane and the second transfer part is 5 to 30 degrees.

2. The alignment transfer device according to claim 1, wherein
a plurality of recesses are formed in a circumferential direction in the first transfer part, and
a depth of the recess is smaller than a height of the solid dosage form.

3. The alignment transfer device according to claim 1, wherein a plurality of storage parts, formed in a notch shape in a radial direction, are formed in the circumferential direction on an inner peripheral surface of the holding part of the second transfer part.

4. The alignment transfer device according to claim 3, wherein a radial depth of the storage part is smaller than a width of the solid dosage form.
